# EUROPÄISCHE PATENTSCHRIFT

(11) **EP 2 462 717 B1**
(45) Veröffentlichungstag und Bekanntmachung des Hinweises auf die Patenterteilung: **28.08.2013**
(21) Anmeldenummer: 10742795.7
(22) Anmeldetag: 29.07.2010
(51) Int. Cl.: H04L 9/06, H04L 9/18

(54) **ECHTZEITFÄHIGE QUANTENCOMPUTERSICHERE VERSCHLÜSSELUNG VON DATEN ALLER ART**
REAL-TIME CAPABLE QUANTUM COMPUTER SECURE ENCODING OF DATA OF ALL TYPES
CHIFFREMENT DE DONNÉES DE TOUTE NATURE, POUVANT FONCTIONNER EN TEMPS RÉEL ET SÉCURISÉ VIS-À-VIS DE L'INFORMATIQUE QUANTIQUE

(30) Priorität: 06.08.2009 DE 102009036386
(43) Veröffentlichungstag der Anmeldung: 13.06.2012
(73) Patentinhaber: Fachhochschule Schmalkalden, 98574 Schmalkalden (DE)
(72) Erfinder: ROZEK, Werner, 98593 Floh-Seligenthal (DE); ROZEK, Jan, 98593 Floh-Seligenthal (DE)
(74) Vertreter: Lippert, Stachow & Partner
(86) Internationale Anmeldenummer: PCT/EP2010/061019
(87) Internationale Veröffentlichungsnummer: WO 2011/015510

(56) Entgegenhaltungen:
- EP-A1- 1 841 122
- DE-A1-102008 010 789
- DE-B3-102008 010 794
- US-A1- 2003 152 219
- US-A1- 2005 166 058
- US-A1- 2006 177 065

## Beschreibung

Die vorliegende Erfindung betrifft ein Verfahren und eine Anordnung zur quantencomputersicheren Verschlüsselung von Daten.

Erhebliche Fortschritte in der Grundlagenarbeit zur Realisierung von Quantencomputer weisen daraufhin, dass Quantencomputer in absehbarer Zeit technisch realisiert werden können. Quantencomputer können bestimmte Aufgaben effizienter ausführen. Dies liegt darin begründet, dass die kleinste Informationseinheit nicht das Bit sondern ein Quantenbit, das so genannte Qubit, ist. Das normale Bit in der herkömmlichen Computertechnik kann während einer Zeiteinheit normalerweise nur ein Zustand 0 oder 1 annehmen, wogegen Qubits gleichzeitig 0 und 1 sein können. Unter Anwendung der Quantensuperposition ist ein Quantencomputer somit in der Lage unterschiedliche Zustände gleichzeitig ausführen zu können. Des Weiteren besitzen Qubits die Eigenschaft der Verschränkung, d. h. das bei Messung des Zustandes eines Qubits auch der Zustand des verschränkten Qubits festgelegt ist. Die Quantenkryptographie benutzt diese Eigenschaft in Verbindung mit rektilinearer und diagonaler Polarisation. Die Übertragung der Zustände von Schlüsselbits als Qubits erfolgt mit polarisierten Photonen. Da jeweils beide Zustände 0 und 1 gleichzeitig mehrfach übertragen werden, fehlt zur richtigen Auswahl des Schlüsselbitzustandes das Wissen über die richtige Polarisation. Benutzt man beim Schlüsselaustausch miteinander verschränkte Photonenpaare, so werden Photonenmessungen in falschen Polarisationsmodus Zustandsänderungen hervorrufen, so dass der berechtigte Empfänger anhand der Verschränkung den Lauschangriff erkennen kann. /ISBN 978-3-431-03734-0/

Zur Lauschangriffserkennung während der Übertragung erscheint die Quantenkryptographie als ein adäquates Mittel. Für den Geheimnisschutz bei gespeicherten Daten ist sie in der obigen Form ungeeignet.

Viele gegenwärtig existierende kyptographische Algorithmen wie z. B. RSA basieren auf der Grundlage großer Zahlen, die in endlicher Zeit mit herkömmlicher Computertechnik in endlicher Zeit nicht berechenbar sind. Mit dem Quantencomputer ist das faktisch kein Problem mehr.

Weiterhin bekannt ist die One-Time-Pad- Verschlüsselung, wo Klardaten mit einem Zufallschlüssel gleicher Länge Exklusiv- Oder verknüpft werden. Laut / ISBN 978-3-446-40971-2 S. 507 unterer Absatz/ ist der One-Time-Pad unknackbar. Der Nachteil dieser Verschlüsselung ist die Schlüsselverwaltung. Die Unknackbarkeit des One- Time-Pads ist nur gegeben, wenn der Schlüssel nur einmal verwendet wird und wirklich zufallsbestimmt ist. Diese Forderungen stellen gleichzeitig einen weiteren Nachteil des One-Time-Pads dar. Bei Verschlüsselung von großen Datenmengen wie z. B. Videodaten müssten Schlüssellängen von mehreren Megabytes am Ort der Verschlüsselung zur Verfügung stehen. Diese müssten geheim mit den Daten zum Ort der Verschlüsselung übertragen werden. Einen Einsatz wie beim PayTV, wo viele Kommunikationsteilnehmer existieren, wäre aus verwaltungstechnischen und geheimen Schlüsselübertragungsgründen damit ausgeschlossen.

Ein Ausweg aus dieser Problematik ist in dem nachfolgend benannten Stand der Technik offenbart.

In DE 10 2008 010 794.8 und in DE 10 2008 010 792.1 sind Lösungen bekannt, die den Schlüsselaustausch in Form hierarchisch mehrfach berechneter permutierter relativer Daten vollziehen. Dabei berechnen sich die relativen Daten innerhalb dynamisch sich ändernden zufallsbestimmten Räumen durch duale vektorielle Subtraktionen von Ortvektoren und Translations- Rotationsvektoren, wobei die Ortvektoren zufallsbestimmte Teilschlüssel, Permutationssteuerinformationen, Zufallsbezugsdaten u. a. m. sein können. Mit der dortigen Übertragung werden Daten so übertragen, dass der Geheimnisschutz der Schlüssel- und Steuerinformationen nicht nur in der Übertragung sondern auch bei der Abspeicherung der Schlüssel- und Steuerinformationen in Verbindung mit den verschlüsselten Daten gesichert ist.

In DE 10 2008 010 789.1 ist ein Chiffrier- und Dechiffrierverfahren offenbart, das dadurch gekennzeichnet ist, dass am Ort der Verschlüsselung mindestens ein Permutationsdatum, ein Schlüsselsteuerdatum und eine Zufallszahl generiert werden. Zufallsschlüssel werden aus mindestens einem separaten Zufallsbezugsdatum und einer Zufallszahl bestimmt. Klardaten werden in Abhängigkeit der Permutationsdaten und der Zufallsschlüssel bitpermutiert und verschlüsselt und/oder paketpermutiert. Den Chiffredaten werden die Permutationsdaten, Schlüsseldaten und Zufallsdaten in Form permutierter relativer Daten zugefügt. Am Ort der Entschlüsselung werden aus den zugefügten Daten alle zur Entschlüsselung notwendigen Daten bestimmt und die Chiffredaten entschlüsselt. Müssen die Daten zwischen der Chiffrierung und Dechiffrierung über das Internet übertragen werden, so könnte in Abhängigkeit des verwendeten Übertragungsprotokolls (z. B. TCP/IP oder UDP) Anpassungen des dortigen Chiffrier- und Dechiffrierverfahren erforderlich sein, was zur Einschränkung des dortig verwendeten One-Time-Pads führen könnte.

In der US 2003/152219 A1 wird ein System und ein Verfahren zur Generierung eines Zufallsausgangsbitstromes beschrieben. Die Aufgabe besteht dabei darin, ein verbessertes System und Verfahren für das Design einer sicheren Stromchiffre bereitzustellen, die sehr schnelle Implementationen in Software ermöglicht. Ziele sind eine verbesserte und sichere Version vom SEAL (Software Efficient ALgorithm) und eine sichere Verschlüsselung mit weniger Verbrauch von Systemressourcen. Ein weiteres Ziel besteht darin, den Kompromiss zwischen Geschwindigkeit und Sicherheit von Stromchiffren zu verbessern. Um dieses Ziel zu erreichen, wurde eine neue kryptographische Kernfunktion und ein verbessertes zweidimensionales Maskenschema verwendet.

Das System umfasst einen entwickelnden Initialzustand, der von einem oder mehreren Initialschlüsseln erzeugt wird, ein oder mehrere Rundenfunktionen und ein oder mehrere Maskentabellen. Jede Rundenfunktion ist Teil eines Schrittes in einer Folge von Schritten. Jeder Schritt wendet die jeweilige Rundenfunktion bei einem aktuellen entwickelnden Zustand an, um den jeweiligen neuen entwickelnden Zustand für die Verarbeitung durch den nächsten Schritt in der Folge zu erzeugen. Der erste Schritt in der Folge startet durch die Verarbeitung des entwickelnden Initialzustandes. Die Maskentabellen werden von einem oder mehreren der Initialschlüssel erzeugt. Jede der Maskentabellen hat ein oder mehrere Masken. Die Masken werden in jedem jeweiligen Schritt, mit dem jeweiligen neu entwickelnden Zustand in einer Kombinationsoperation kombiniert, um ein entsprechenden Schritt-Output zu erzeugen. Der Zufallsausgangsstrom der Bits ist eine Verknüpfung aller jeweiligen Schritt-Outputs.

Die verwendete Rundenfunktion benutzt simultan zwei nichtlineare Permutationen, welche einen Mix von einem Substitutions-Permutations-Netzwerk und einem Feistel Ladder darstellen. Jede nichtlineare Permutation erfolgt in einem 64 BitBlock. Dieser wird als eine 2x4 Matrix von Bytes angesehen. Zuerst wird eine Byte-Substitution mit einer invertierenden S-Box angewandt. Danach wird die zweite Zeile der Ergebnismatrix zyklisch durch ein Byte nach rechts verschoben. Anschließend wird jede Spalte der Matrix mit einer festen 2x2 invertierbaren Matrix multipliziert. Die Permutation ist abhängig von der S-box und der festen Multiplikationsmatrix.

Diese Lösung stellt nur einen Kompromiss zwischen Geschwindigkeit und Sicherheit von Stromchiffren dar. Um letzteres zu gewährleisten, sind mehrfache komplexe Rundenfunktionen erforderlich.

Die erfindungsgemäße Aufgabe besteht daher darin, ein Verschlüsselungsverfahren anzugeben, das sowohl gegen konventionelle als auch gegen quantencomputerbasierte Angriffe resistent ist.

Die Aufgabe der Erfindung besteht weiterhin darin, ein Verfahren einschließlich einer Anordnung zu schaffen, mit denen quantencomputersichere Ver- und Entschlüsselungen von Daten in Echtzeit ausgeführt werden können. Weitere Ziele der Erfindung sind: Realisierung einer echten One-Time-Pad Verschlüsselung unabhängig von dem verwendeten Übertragungsprotokoll, Realisierung einer Chiffrierung die Quantencomputer und gleichzeitig die klassischen kryptoanalytischen Angriffe widerstehen ohne die Effizienz in Bezug auf Speicherplatz und Laufzeit zumindern. Des Weiteren soll das Chiffrier- und Dechiffrierverfahren in embedded Systemen und bei mobilen Anwendungen einsetzbar sein.

Gegenüber dem Stand der Technik erfolgt erfindungsgemäß die echtzeitfähige quantencomputersichere Verschlüsselung von Daten aller Art mit
1. am Ort der Verschlüsselung generierten zufallsbestimmten Maskenverteilungsinformation, d.h. die selbst zufallsverteilt ist, und Permutationssteuerinformationen, die in mindestens einem Permutationssteuerinformations- Look up Tabellenspeicher und zufallsverteilt in mindestens einem Masken-Look up Tabellenspeicher zur Verschlüsselung gespeichert werden,
2. dynamischen zufallsbestimmten Eingangsbitpermutationen innerhalb N-Bit- langen Datenblöcken (N=128), wobei aufeinander folgende Datenblöcke von bis zu ca. 10³⁷ Datenblöcken unterschiedlich permutiert werden,
3. dynamischen N- Bit- langen Blockschlüsseln von bis zu ca. 10³⁸ Datenblöcken, wobei ein Bitzufallsschlüssel bei 128 Bit langen Datenblöcken von bis zu ca. 10⁴⁰ zur Verfügung steht,
4. dynamischen Blockschlüsseln, die aus mindestens zwei Datenblock langen zufallsbestimmten Teilschlüsseln und rückgekoppelten verschlüsselten permutierten Daten oder aus mindestens zwei Datenblock langen zufallsbestimmten Teilschlüsseln oder rückgekoppelten verschlüsselten permutierten Daten generiert werden,
5. dynamischen Blockschlüsseln, die aus zufallsbestimmten Teilschlüsselbits und dynamisch zufallsbestimmten rückgekoppelten verschlüsselten permutierten Datenbits oder aus zufallsbestimmten Teilschlüsselbits oder dynamisch zufallsbestimmten rückgekoppelten verschlüsselten permutierten Datenbits durch bitweise zufallsbestimmten Logikverknüpfungen wie Antivalenz oder Äquivalenz ermittelt werden,
6. dynamischer bitweise zufallsbestimmter Verschlüsselung von permutierten Klardatenbits mit den dynamisch zufallsbestimmten Blockschlüsselbits, wobei eine Bitverschlüsselung dynamisch bitweise zufallsgesteuert durch eine Antivalenz- oder Äquivalenz- Logikverknüpfung geschieht,
7. dynamischen bitweise zufallsbestimmten Vermischungen jeweils zweier N-Bitlangen Datenblöcken,
8. dynamischen zufallsbestimmten Ausgangsbit-Paketpermutationen zweier N-Bitlanger Datenblöcke, wobei aufeinander folgende N-Bit lange Datenblöcke von bis zu ca. 10³⁷ zweier N- Bit- langen Datenblöcken unterschiedlich permutiert werden.

Erfindungsgemäß erfolgt die echtzeitfähige quantencomputersichere Entschlüsselung mit
1. den am Ort der Verschlüsselung generierten zufallsbestimmten Maskenverteilungsinformation und Permutationssteuerinformationen, die insbesondere in Form permutierter relativer Daten oder verschlüsselter Daten zum Ort der Entschlüsselung übertragen und am Ort der Entschlüsselung in gleicher Weise in den Permutationssteuerinformation-Look- up Tabellenspeicher und zufallsverteilt in die Masken-Look up Tabellenspeicher zur Entschlüsselung gespeichert werden,
2. dynamischen zufallsbestimmten Eingangsbit-Paketrepermutationen
3. Entflechtungen der dynamischen bitweise zufallsbestimmten vermischten Daten der jeweiligen zweier N-Bit- langen Datenblöcke,
4. dynamisch zufallsbestimmter bitweiser Entschlüsselung der dynamisch zufallsbestimmten verschlüsselten permutierten Klardatenbits,
5. dynamisch zufallsbestimmten Ausgangsbitrepermutationen, so dass die Klardaten wieder vorliegen.

Erfindungsgemäß wird die Aufgabe durch die in den Ansprüchen dargestellte Lehre gelöst. Im Folgenden wird die Erfindung beispielhaft und detailliert anhand der Figuren 1 bis 15 näher erläutert.

Im Einzelnen zeigen:
Figur 1: ein Blockbild der erfindungsgemäßen Anordnung
Figur 2: eine Interface-Einheit 2 zum Datenaustausch von Klar- und Chiffredaten
Figur 3: eine Bit(re)permutationseinheit 3
Figur 4: eine Schleifendatenschlüsseleinheit 4
Figur 5: eine Paket- Bit(re)permutationseinheit 5
Figur 6: eine Permutations- Masken- Steuerungseinheit 6
Figur 7: eine Schlüsseleinheit 7
Figur 8: eine Schleifensteuereinheit 8
Figur 9: eine Takteinheit 9
Figur 10: ein Multiplexer 10.j
Figur 11: eine Multiplexereinheit 11.j
Figur 12: ein Logikmodul 12.j
Figur 13: eine Logikeinheit 13.j
Figur 14: eine Maskensteuereinheit 14
Figur 15: eine Bitpaketsteuereinheit 15

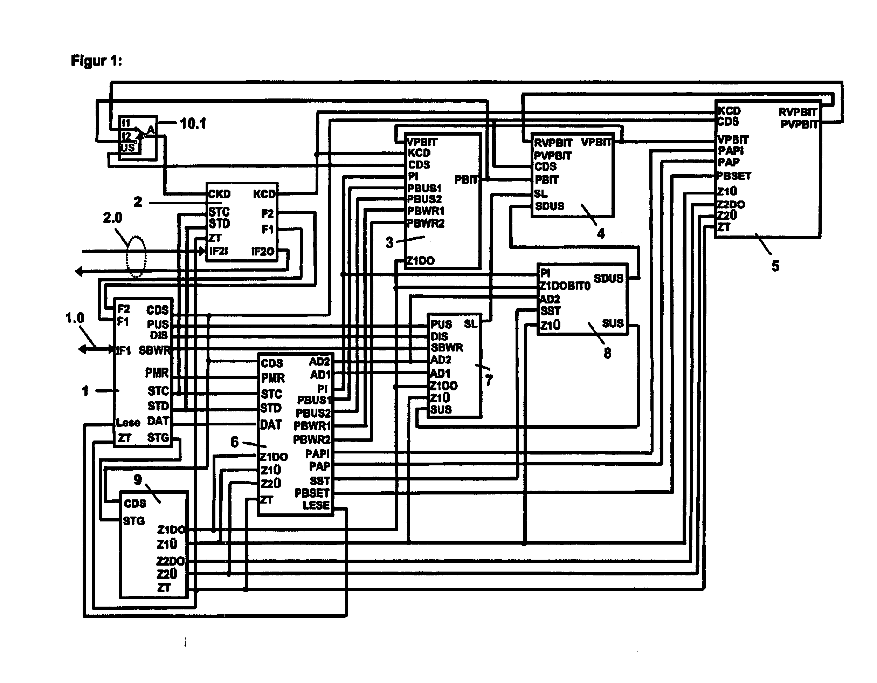

In dem Blockschaltbild der erfindungsgemäßen Anordnung in Figur 1 sind dargestellt Interfaceeinheiten (1, 2), eine Bit(re)permutationseinheit 3, eine chleifendatenschlüsseleinheit 4, eine Paket- Bit(re)permutationseinheit 5, eine Permutations-Masken- Steuerungseinheit 6, eine Schlüsseleinheit 7, eine Schleifensteuereinheit 8, eine Takteinheit 9 und ein Multiplexer 10.1 und deren Signalverbindungen untereinander.

Die Interfaceeinheit 1 steht über Datenleitungen 1.0 mit einem nicht dargestellten Mikrocontroller MC1 in Verbindung. Die Aufgabe des Mikrocontrollers MC1 ist die Bereitstellung und Verwaltung geheimer zufallsbestimmter Teilschlüsseldaten und Steuerinformationen wie einer 6Bit breiten Maskenverteilungssteuerinformation und den 128 Permutationssteuerinformationen. Interfaceeinheit 1 steuert über die Signale STC (Start der Chiffrierung) und STD (Start der Dechiffrierung) das Schreiben und Lesen in der Interfaceeinheit 2.

Die Interfaceeinheit 2 steht mit den Datenleitungen 2.0 mit einem Mikrokontroller in Verbindung. Über die Datenleitungen 2.0 werden am Ort der Verschlüsselung die Klardaten zur Verschlüsselung bereitgestellt und die Chiffredaten nach der Verschlüsselung entnommen. Am Ort der Entschlüsselung stellt der Mikrokontroller die Chiffredaten zur Verfügung und nimmt die Klardaten in Empfang. Vorzugsweise ist der mit den Datenleitungen 2.0 verbundene nicht dargestellte Mikrocontroller MC2 nicht mit dem Interface 1 verbunden. Ebenfalls existiert keine Verbindung zwischen den Datenleitungen 2.0 und dem MC1. Der Mikrocontroller MC2 steht über weitere Interfaces mit der Außenwelt in Verbindung. Der Mikrokontroller MC1 ist mit einem ihn zugeordneten lokalen Zufallsgenerator und mit einer MINI-SD- Karte verschalten. Mikrocontroller MC1 und MC2 stehen über mindestens ein separates Interface untereinander in Verbindung.

Die Verwendung zweier Mikrocontroller, bei dem MC2 für den Kontakt mit der Außenwelt wie dem Internet und der Datenbereitstellung und MC1 für sicherheitsrelevante Arbeiten und Daten benutzt werden, ermöglicht eine Trennung des Hochsicherheitsbereichs MC1 vom mit der Außenwelt verbundenen Bereich MC2.

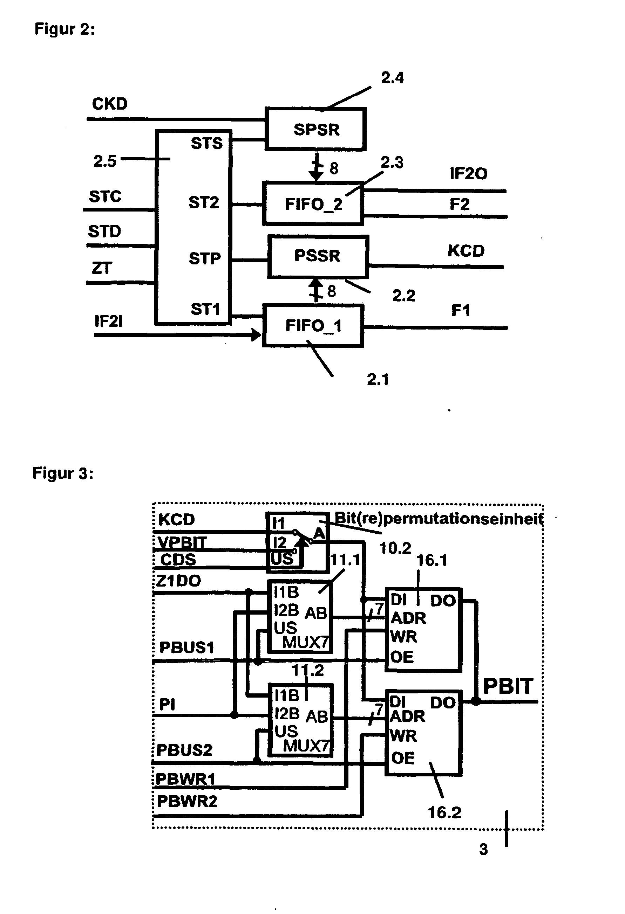

Das Interface 2 besteht im Wesentlichen, wie in Figur 2 dargestellt, aus einem Empfangs- FIFO (First In First Out) 2.1, einem Parallel-Seriell-Schieberegister 2.2, einem Ausgangs- FIFO 2.3, einem Seriell-Parallel-Schieberegister 2.4 und einer Registersteuereinheit 2.5. Empfangs- FIFO 2.1 und Ausgangs- FIFO 2.3 zeigen über die Füllzustandssignale F1 und F2 der Interface-Einheit 1 den Füllzustand der FIFO' s an. Die Steuersignale STS, ST2, STP und ST1 steuern in Verbindung mit dem Start der Chiffrierung STC, dem Start der Dechiffrierung STD und dem zentralen Bittakt ZT den Datentransport in 2.1 bis 2.4. Das Interface 2 steht mit dem seriellen Ausgang KCD (Klar-Chiffre-Daten) mit den Eingängen KCD der Bit(re)permutationseinheit 3 und der Paket- Bit(re)permutationseinheit 5 in Verbindung. Das Interface 2 empfängt den seriellen Chiffredatenbitstrom oder den seriellen Klardatenbitstrom am Eingang CKD (Chiffre-Klar-Daten).

Die nicht im Detail dargestellte Interface- Einheit 1 stellt über ein Datenregister am seriellen Ausgang DIS die Teilschlüssel bitweise für die Teilschlüssel- Look up

Tabellenspeicher 7.1 und 7.2 der Schlüsseleinheit 7 zur Verfügung. Über den Ausgang SBWR (Schlüsselbitschreiben) steuert die Interface-Einheit 1 in Verbindung mit dem Übertragssignal Z1 Ü des 7Bit- Rückwärtszählers 9.2 und dem zentralen Bittakt ZT über das Schreibsignalsteuermodul 7.3 der Schlüsseleinheit 7 das Einschreiben der Schlüsselbits. Die Interface Einheit 1 enthält weiterhin ein weiteres Datenregister, das ausgangsseitig mit dem Eingang DAT der Permutations-Masken- Steuerungseinheit 6 und somit mit den Masken- Look up Tabellenspeichern (6.0, 6.1, 6.2, 6.3, 6.4), dem Permutationssteuerinformation- Look up Tabellenspeicher 6.5 sowie dem Programmiermaskensteuerregister 14.15 verbunden ist. Des Weiteren enthält die Interface-Einheit 1 Befehlsregister für Start der Chiffrierung STC, Start der Dechiffrierung STD, Chiffrierung- Dechiffrierung- Signal CDS, Programmierungsumschaltung für Teilschlüsselspeicherung PUS, Start des Taktgenerators STG und Software RESET. In Verbindung mit F1, F2 und Lesesignal Lese steuert es über CDS, STG, STC und STD den Datendurchlauf.

Die Bit(re)permutationseinheit 3 enthält, wie in Figur 3 gezeigt, zwei 128 Bit große Bit(re)permutationsdatenspeicher (16.1, 16.2), die Multiplexereinheiten (11.1, 11.2) und einen Multiplexer 10.2.

Mit dem Steuersignal CDS zeigt der MC1 über das Befehlsregisterbit CDS an, ob es sich um eine Chiffrierung oder Dechiffrierung handelt. Bei aktiver Chiffrierung ist der Multiplexer 10.2 auf Eingang I1 geschaltet, wogegen bei aktiver Dechiffrierung der Eingang I2 zum Ausgang A geschaltet ist. Die Datenbits des Bitdatenstroms KCD (Klar-Chiffre- Daten) liegen über den Ausgang A des Multiplexers 10.2 an beiden Eingängen DI der Bit(re)permutationsdatenspeicher (16.1, 16.2). Durch die Steuersignale PBWR 1, PBWR 2 (Permutationsbit- Schreiben) werden wechselnd 128 Bitdatenblöcke in einem der beiden Bit(re)permutationsdatenspeicher eingelesen und parallel aus dem anderen Bit(re)permutationsdatenspeicher ausgelesen. Beide Bit(re)permutationsdatenspeicher besitzen Output Enable gesteuerte Datenausgänge. Bei aktivem Permutations- Output Enable PBUS1 oder PBUS2 sind die zugeordneten Multiplexereinheiten 11.1 oder 11.2 so geschaltet, dass die maskengesteuerte Permutationssteuerinformation PI am Adresseingang des auszulesenden Bit(re)permutationsdatenspeichers liegt. Die dem inaktiven Permutations- Output Enable zugeordnete Multiplexereinheit schaltet den Datenausgang Z1 DO des 7Bit Zählers 9.2 auf den Adresseingang des einzulesenden Bit(re)permutationsdatenspeichers.

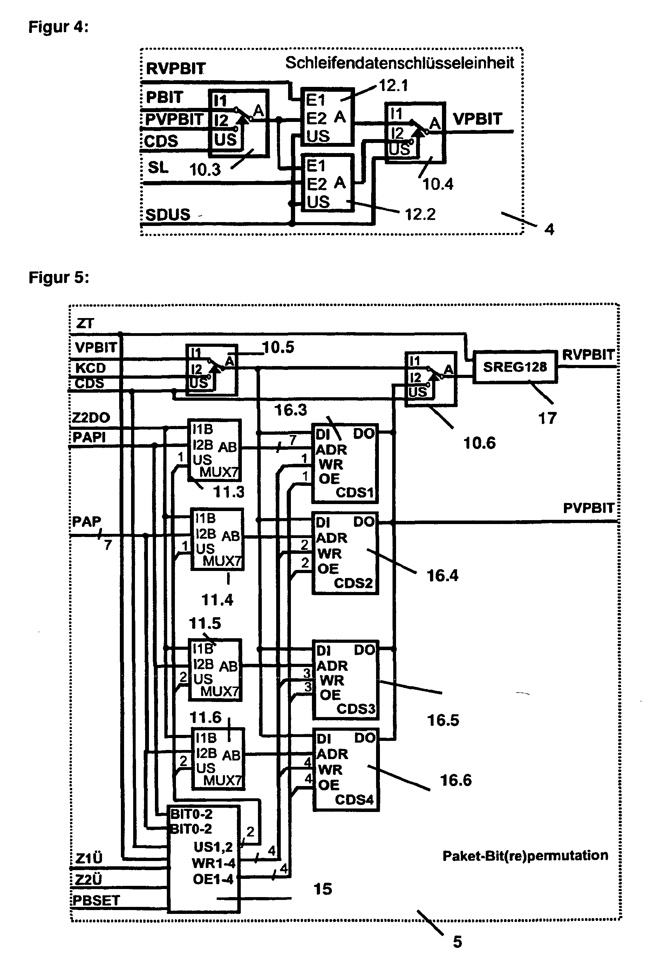

Figur 4 zeigt die Schleifendatenschlüsseleinheit 4. Sie besteht aus einem Multiplexer 10.3 den Logikmodulen (12.1, 12.2) und einem weiteren Multiplexer 10.4. In Abhängigkeit vom Chiffrierung- Dechiffrierung- Signal CDS wird der Ausgang PBIT der Bit(re)permutationseinheit 3 oder der Ausgang PVPBIT der Paket- Bit(re)-permutationseinheit 5 über den Ausgang des Multiplexer 10.3 an den Eingang E2 des Logikmoduls 12.1 und an den Eingang E1 des Logikmoduls 12.2 geschaltet. Am Eingang E1 des Logiksmoduls 12.1 liegt der vom Ausgang RVPBIT der Paket-Bit(re)permutationseinheit 5 rückgekoppelte verschlüsselte permutierte Bitdatenstrom RVPBIT als möglicher Blockschlüssel an. Der Eingang E2 des Logikmoduls 12.2 ist mit dem Ausgang SL der Schlüsseleinheit 7 verbunden.

Die Ausgänge der Logikmodule (12.1, 12.2) liegen je an einem Eingang des ausgangsseitigen Multiplexer 10.4 der Schleifendatenschlüsseleinheit 4.

Mit dem Steuersignal SDUS werden die Logikeinheiten (12.1, 12.2) so gesteuert, dass die am Eingang PBIT seriell anliegenden eingangsbitpermutierten Klardatenbits oder die am Eingang PVPBIT seriell anliegenden eingangsbitpaketrepermutierten verschlüsselten bitpermutierten Datenbits mit den entsprechenden seriell anliegenden Blockschlüsselbits antivalent oder äquivalent verknüpft werden. Mit dem ausgangsseitigen Multiplexer 10.4 wird eine zufallsbestimmte bitgesteuerte Auswahl getroffen, welche der Bitverschlüsselung oder Bitentschlüsselung von den Logikmodulen (12.1, 12.2) bei der Chiffrierung oder Dechiffrierung benutzt wird.

In Figur 5 dargestellt, ist die Paket-Bit(re)permutationseinheit 5. Sie besteht aus den Multiplexern (10.5, 10.6), den Multiplexereinheiten (11.3, 11.4, 11.5, 11.6), den Paket-Bit(re)permutationsdatenspeicher (16.3, 16.4, 16.5, 16.6), einer Paket-Bit(re)permutationsteuereinheit 15 und einem seriellen, 128Bit-langen Schieberegister 17. Je ein der Paket-Bit(re)permutationsdatenspeicherpaare (16.3, 16.4) und (16.5, 16.6) werden wechselnd beschrieben oder ausgelesen. Das Beschreiben eines Paket-Bit(re)permutationsdatenspeicherpaares wird bei aktiver Chiffrierung (Multiplexer 10.5 und 10.6 schalten ihren Eingang I1 auf ihren Ausgang A) bitwechselnd in Verbindung mit der Zähleradressierung des 7Bit Zählers 9.3 und den zugeordneten Schreibsignalen (WR1, WR2) oder (WR3, WR4) vorgenommen. Jedes zweite Bit eines 128Bit langen verschlüsselten, permutierten Datenstrom wird in einem der Paket-Bit(re)permutationsdatenspeicher des Paket-Bit(re)-permutationsdatenspeicherpaares eingeschrieben, wobei der Beginn des Einschreibens zufallsbestimmt durch die Paket-Bit(re)permutationsteuereinheit 15 vorgegeben wird. Das Auslesen des anderen Paket-Bit(re)permutationsdatenspeicherpaares geschieht Paket-Bit(re)permutationsdatenspeicher bezogen, d. h. dass zuerst der eine Paket-Bit(re)permutationsdatenspeicher und dann der andere Paket-Bit (re)permutationsdatenspeicher vollständig ausgelesen werden. Welches der beiden Paket-Bit(re)permutationsdatenspeicher als erstes ausgelesen wird, steuert die Paket-Bit(re)permutationsteuereinheit 15. Das Auslesen der Paket-Bit(re)permutattionsdatenspeicher erfolgt bei Chiffrierung mit der PAP- und PAPI- maskengesteuerten Permutationsteuerinformationsadressierung.

Die Verwendung der verschiedenen zufallsbestimmten maskengesteuerten Permutationsteuerinformationen PAP und PAPI garantieren in Verbindung mit dem Vermischen von verschlüsselten, permutierten Datenbits zweier 128Bit- langer Datenblöcke, deren Datenbits verschieden bitpermutiert sind und mit unterschiedlichen zufallsbestimmten Blockschlüsseln verschlüsselt werden, innerhalb eines 256Bit langen Datendoppelblockes eine quantencomputersichere Verschlüsselung einzelner Datenblöcke. Die Verschlüsselung aller Datenblöcke wird durch die dynamisch zufallsbestimmten Veränderungen aufeinander folgender Paketbitpermutationen nochmals erhöht.

Das Beschreiben eines Paket-Bit(re)permutationsdatenspeicherpaares wird bei aktiver Dechiffrierung (Multiplexer 10.5 und 10.6 schalten ihren Eingang I2 auf ihren Ausgang A) zuerst mit der PAP- und PAPI- maskengesteuerte Permutationsteuerinformationsadressierung vorgenommen. Das Auslesen des eingelesenen Datendoppelblockes erfolgt bitwechselnd in Verbindung mit der Zähleradressierung des 7Bit Zählers 9.3 und den zugeordneten Output Enable- Signalen (OE1, OE2) oder (OE3, OE4). Der paket-bitrepermutierte verschlüsselte permutierte Bitdatentrom PVPBIT wird als Blockschlüssel über den Multiplexer 10.6 in das serielle 128 Bit lange Schieberegister 17 eingeschoben und gleichzeitig zum Eingang des Multiplexers 10.3 der Schleifendatenschlüsseleinheit 4 geführt.

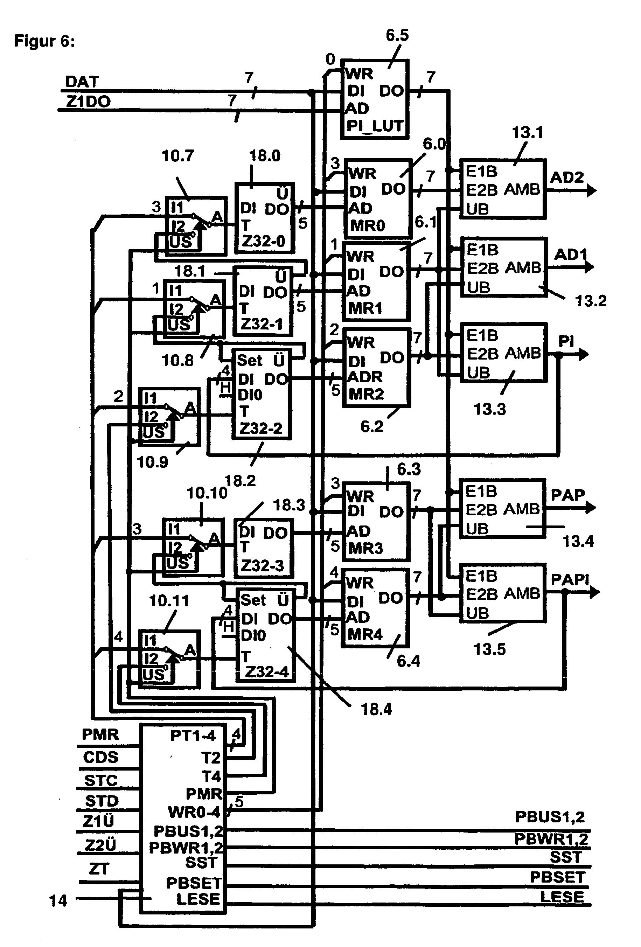

Figur 6 zeigt eine Blockschaltung der Permutations- Masken- Steuerungseinheit 6. Dargestellt sind: Masken- Look up Tabellenspeicher (6.0, 6.1, 6.2, 6.3, 6.4), Permutationssteuerinformation- Look up Tabellenspeicher 6.5, Logikeinheiten (13.1, 13.2, 13.3, 13.4, 13.5), die 5Bit- Zähler (18.0, 18.1, 18.2, 18.3, 18.4), Multiplexer (10.7, 10.8, 10.9, 10.10, 10.11) und Maskensteuereinheit 14. Der Masken- Look up Tabellenspeicher 6.0 ist ein Spiegelspeicher (Speicher mit gleichen Maskeninhalt) des Masken- Look up Tabellenspeichers 6.3. Er wird während der Programmierung gleichzeitig mit den gleichen 7Bit breiten Permutationssteuerinformationen beschrieben.

Die Masken- Look up Tabellenspeicher (6.0, 6.1, 6.2, 6.3, 6.4) werden mit Hilfe der Zähler (18.0, 18.1, 18.2, 18.3, 18.4) adressiert. Zur Programmierung der Masken- Look up Tabellenspeicher sind die Zähler (18.0, 18.1, 18.2, 18.3, 18.4) mit Hilfe eines RESET auf Ox1F gesetzt. Über das Programmiermaskenregistersteuersignal PMR werden die Multiplexer (10.7, 10.8, 10.9, 10.10, 10.11) auf Eingang I1 geschaltet, so dass die von der Maskensteuereinheit 14 bereitgestellten zufallsbestimmten Programmiertakte (PT1, PT2, PT3, PT4) mit ihrem zugeordneten Takteingang der Zähler (18.0, 18.1, 18.2, 18.3, 18.4) verbunden sind.

Die Permutationssteuerinformationen werden über den Dateneingang DAT in Verbindung mit dem Schreibsignal WR0 der Maskensteuereinheit 14 und den Zählerausgang Z1 DO adressiert in den Permutationssteuerinformation- Look up Tabellenspeicher 6.5 geschrieben. Gleichzeitig werden die einzelnen 7Bit breiten Permutationssteuerinformationen zufallsverteilt in einen der Masken- Look up Tabellenspeicher (6.0, 6.1, 6.2, 6.3 6.4) gespeichert.

Die Zähler (18.2, 18.4) sind dynamisch einstellbare Zähler, deren Voreinstellwerte am Ausgang der Logikeinheiten (13.3, 13.5) abgegriffen werden. Diese Verschaltungen ermöglichen eine dynamisch gesteuerte zufallsbestimmte Maskenauswahl.

Im Betriebsfall (Chiffrierung oder Dechiffrierung) sind die Multiplexer (10.7, 10.8, 10.9, 10.10, 10.11) auf Eingang I2 geschaltet. An den Multiplexereingängen I2 der Multiplexer 10.9 und 10.11 liegen die Zähltakte T2 und T4. Der Zähltakt T2 wird bitblockbezogen in Verbindung mit dem Zählerübertrag Z1 Ü des 7Bit Zählers 9.2 generiert. Der Zähltakt T4 wird doppelblockbezogen mit dem Zählerübertrag des 7Bit Zählers 9.3 gebildet. Der Zähltakteingang vom Zähler 18.0 ist an dem Übertragsausgang des Zählers 18.1, dessen Zähltakteingang am Übertragsausgang des Zählers 18.2 geschalten ist. Der Zähltakteingang des Zählers 18.3 ist über den Multiplexer 10.10 mit dem Übertragsausgang des Zählers 18.4 verbunden.

Die 7Bit- Ausgänge DO der Masken- Look up Tabellenspeicher (6.0, 6.1, 6.2, 6.3 6.4) sind mit ihren zugeordneten Eingängen der Logikeinheiten (13.1, 13.2, 13.3, 13.4, 13.5) so verschaltet, dass eine Vielzahl von zufälligen Masken zur Permutationsteuerung und Schlüsselsteuerung gebildet werden. Die parallelen Bits der Ausgänge der Masken- Look up Tabellenspeicher (6.0, 6.1, 6.2, 6.3 6.4) werden entweder antivalent oder äquivalent mit den parallelen Bits der Permutationssteuerinformationen des Permutationssteuerinformation- Look up Tabellenspeicher 6.5 verknüpft oder zur Steuerung der Verknüpfungsauswahl benutzt.

Der Ausgang PI der Permutations- Masken- Steuerungseinheit 6 ist mit dem PI-Eingang der Bit(re)permutationseinheit 3 verbunden. Dort werden die 7Bit bei Chiffrierung zum zufallsbestimmten adressierten Auslesen eines der beiden Bit(re)permutationsdatenspeicher (16.1, 16.2) verwendet. Bei Dechiffrierung dienen die 7Bit PI-Daten zum adressierten repermutierten Einlesen der entschlüsselten permutierten Klardaten.

Die Ausgänge (PAPI, PAP) der Permutations- Masken- Steuerungseinheit 6 sind mit der Paket- Bit(re)permutationseinheit 5 verschaltet, wo sie bei Chiffrierung zum zufallsbestimmten permutierten Auslesen und bei Dechiffrierung zum repermutierten Einlesen in die Paket-Bit(re)permutationsdatenspeicherpaare (16.3, 16.4) und (16.5, 16.6) dienen.

Die Permutationsbitschreibsignale (PBWR1, PBWR2) steuern das N- Bitblock alternierende Einschreiben der Klarbitdaten oder entschlüsselten permutierten Bitdaten in die Bit(re)permutationsdatenspeicher (16.1, 16.2) der Bit(re)permutations-einheit 3. Die Permutations- Output Enablesignale (PBUS1, PBUS2) steuern das N- Bitblock alternierende permutierte Auslesen der Klarbitdaten oder der repermutierten Klardaten aus den Bit(re)permutationsdatenspeichern (16.1, 16.2).

Die Ausgänge (AD1, AD2) der Permutations- Masken- Steuerungseinheit 6 sind mit den jeweiligen Eingängen (AD1, AD2) der Schlüsseleinheit 7 verschalten, wobei der Ausgang AD2 noch mit dem Eingang AD2 der Schleifensteuereinheit 8 in Verbindung steht.

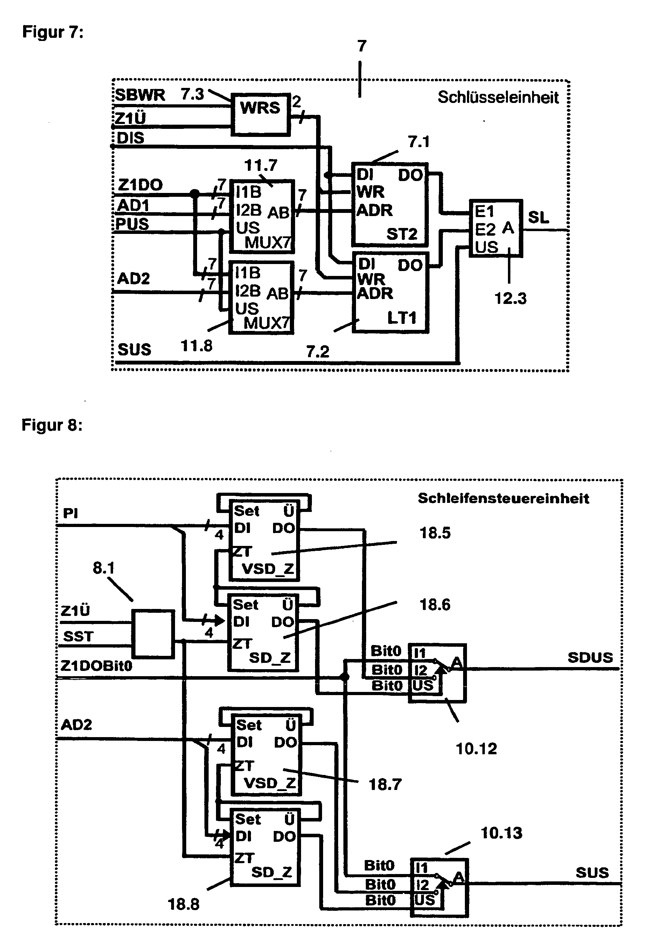

Figur 7 zeigt einen Aufbau der Schlüsseleinheit 7. Dargestellt sind zwei Teilschlüssel- Look up Tabellenspeicher (7.1, 7.2), zwei Multiplexereinheiten (11.7, 11.8), ein Logikmodul 12.3 und ein Schreibsignalsteuermodul 7.3. Bei der Programmierung der Teilschlüssel- Look up Tabellenspeicher (7.1, 7.2) werden die Multiplexereinheiten (11.7, 11.8) mit dem Programmiersteuersignal PUS auf die Eingänge I1B geschalten, so dass die Adressierung der Teilschlüssel- Look up Tabellenspeicher (7.1, 7.2) mit Z1O geschieht. Im Betriebsfall (Chiffrierung oder Dechiffrierung) schaltet das Programmiersteuersignal PUS die Multiplexereinheiten (11.7, 11.8) auf die Eingänge I2B um. Damit werden der Teilschlüssel- Look up Tabellenspeicher 7.1 mit AD1 und der Teilschlüssel- Look up Tabellenspeicher 7.2 mit AD2 zufallsbestimmt adressiert. Der Ausgang des Teilschlüssel- Look up Tabellenspeichers 7.1 ist mit dem Eingang E1 des Logikmoduls 12.3 verschaltet, wobei der Ausgang des Teilschlüssel- Look up Tabellenspeichers 7.2 mit dem Eingang E2 verbunden ist. Das Logikmodul verknüpft die Eingänge bitweise antivalent oder äquivalent. Welche Verknüpfung benutzt an den Ausgang SL (Schlüssel) erscheint, wird zufallbestimmt durch das Schlüsselumschaltsignal SUS gesteuert.

Figur 8 zeigt eine Ausführungsart einer Schleifensteuereinheit 8. Im Einzelnen besteht die Schleifensteuereinheit 8 aus den voreinstellbaren Zählern (18.5, 18.6, 18.7, 18.8), den Multiplexern (10.12, 10.13) und einem Schleifentakttor 8.1. Nach einem RESET sind die Zähler (18.5, 18.6, 18.7, 18.8) auf 0x01 gesetzt. Die Multiplexer 10.12 und 10.13 sind dann so geschaltet, dass I2 an den Ausgang A erscheint.

Mit dem Schleifentakttor 8.1 wird bei aktivem Schleifenschlüsseltaktsignal SST das Übertragsignal Z1Ü des Zählers 9.2 an die Takteingänge der Zähler (18.6, 18.8) geschalten. Mit den jeweiligen Übertragssignalen der Zähler (18.5, 18.6, 18.7, 18.8) werden die Zähler (18.5, 18.6) mit je einem Nibble des zufallsbestimmten PI-Wertes und die Zähler (18.7, 18.8) mit je einem Nibble des zufallsbestimmten AD2-Wert voreingestellt. In Abhängigkeit der Nibble- Werte steuern die Bit' s 0 der Zähler (18.6, 18.8) die Umschalteingänge der Multiplexer (10.12, 10.13). Dabei werden zwischen den Bit0- Ausgängen der Zähler (18.5, 18.7) und dem Bit0 des Zählers 9.2 bitblockbezogen umgeschaltet. Das hat zur Folge, dass die Blockschlüssel aufeinander folgender Blöcke über die Logikmodule (12.1, 12.2) und Multiplexer 10.4 unterschiedlich zufallsbestimmt logikverknüpft sind.

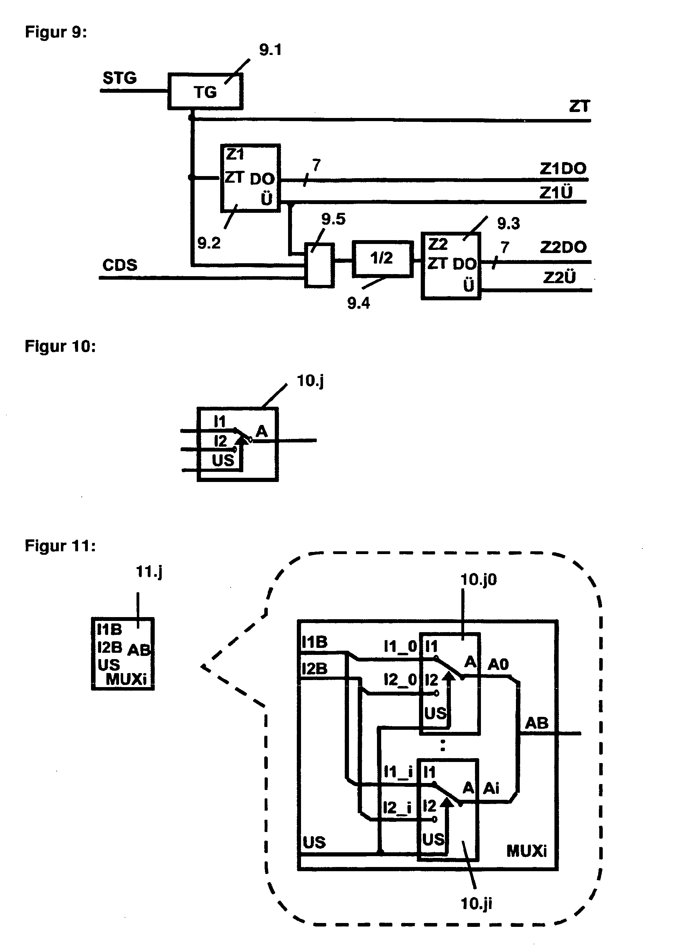

Figur 9 zeigt exemplarisch ein Blockbild von der Takteinheit 9. Sie setzt sich zusammen aus einem Taktgenerator 9.1, den 7Bit-Zählern (9.2, 9.3), einem Taktteiler 9.4 und einer Torschaltung 9.5. Mit dem Signal STG (Start Taktgenerator) initiiert der Mikrocontroller MC1 über das entsprechende Befehlsregister der Interfaceeinheit 1 den Taktgenerator. Die Torschaltung 9.5 hat die Aufgabe bei Chiffrierung das Durchgreifen des ersten Übertragssignals Z1 Ü zusperren, so dass mit dem ersten Auslesen eines der Bit(re)permutationsdatenspeicher (16.1, 16.2) das zugeordnete zufallsbestimmte Einlesen in das Paket-Bit(re)permutationsdatenspeicherpaares (16.3, 16.4) erfolgen kann.

Figur 10 zeigt prinzipiell den Multiplexer 10.j, wobei in Figur 11 die Multiplexereinheit 11.j dargestellt ist. Wie aus Figur 11 erkennbar, besteht die Multiplexereinheit MUXi aus i-parallelen Multiplexern 10.j.

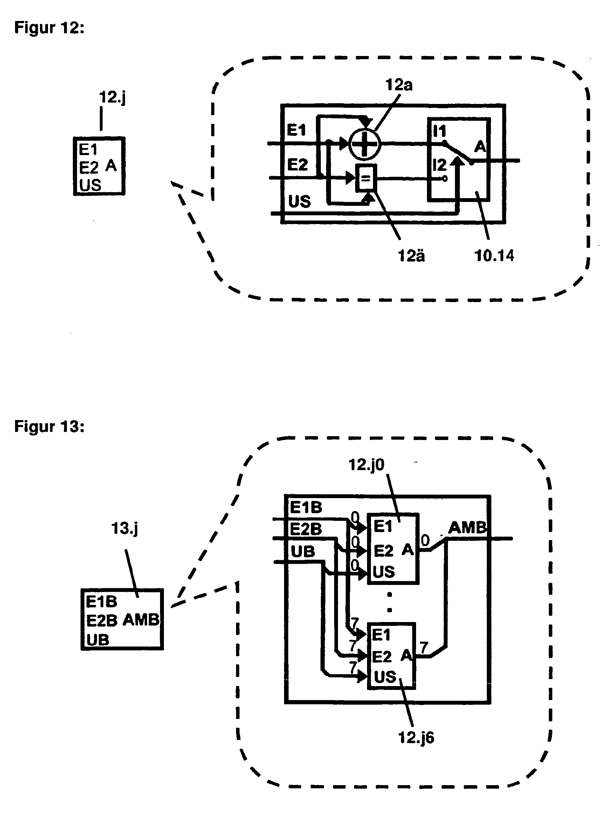

Das Logikmodul 12.j ist in Figur 12 gezeigt. Das Logikmodul besteht aus einem Multiplexer 10.14, einem Antivalenzgatter 12a und einem Äquivalenzgatter 12ä, die ausgangsseitig an einen der beiden Eingänge des Multiplexers 10.14 geführt sind. In Figur 13 ist eine Logikeinheit 13.j abgebildet. Sie besteht aus sieben parallelen Logikmodulen 12.j.

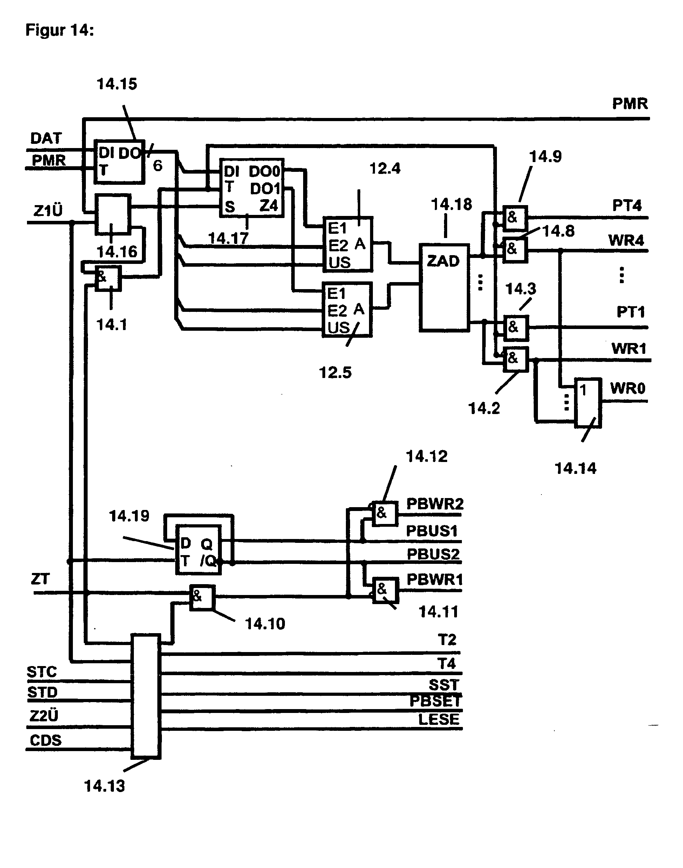

Figur 14 veranschaulicht die Maskensteuereinheit 14. Bestandteile sind AND- Gatter (14.1 bis 14.10), AND- Gatter (14.11, 14.12) mit negiertem Eingang, Logikmodule (12.4, 12.5), Steuersignaleinheit 14.13, Oder- Gatter 14.14, 6Bit-breites Programmiermaskensteuerregister 14.15, eine Voreinstelleinheit 14.16, 2Bit- Zähler 14.17, Zähler-Adressen-Decodermodul 14.18 und D-Flipflop 14.19. Mit dem Aktivwerden des Programmiermaskenregistersteuersignals PMR wird die zufallsbestimmte Maskenverteilungssteuerinformation in das Programmiermaskensteuerregister 14.15 geschrieben. Nach der Übernahme der Maskenverteilungssteuerinformation wird der Zähler 14.17 auf den Wert der unteren zwei Bits von 14.15 gesetzt. Je zwei Bits vom Programmiermaskensteuerregister 14.15 sind mit den E2-Eingängen und die verbleibenden zwei Bits mit den Umschalteingängen der Logikmodule (12.4, 12.5) verschalten. Bit 0 und Bit 1 des Zählers 14.17 sind mit je einem Eingang E1 der Logikmodule (12.4, 12.5) verbunden. Ihre Ausgänge gehen zum Adressdecoder 14.18, der in Abhängigkeit der anliegenden Werte eine Taktperiode eines der Zähltakte (PT1-PT4) aktiviert. Die Zähltakte (PT1 bis PT4) werden dabei zu Beginn der Taktperiode von ZT und die Schreibsignale in der zweiten Hälfte der Taktperiode ZT aktiviert. Über das Oder- Gatter 14.14 wird parallel dazu das Schreibsignal WR0 generiert. Mit dem Aktivwerden des Zähltaktes wird der zugeordnete Zähler in Figur 6 um Eins reduziert. Das D-Flipflop 14.19 dient dem blockbezogenen alternierenden Ein- und Auslesen der Bit(re)permutationsdatenspeicher (16.1, 16.2). Die Steuersignaleinheit 14.13 generiert während der Chiffrierung oder Dechiffrierung aus ihren Eingangssignalen die Zähltakte (T2, T4), das Schleifenschlüsseltaktsignal SST, das Paketbitsetzsignal PBSET und das Lesesignal LESE. Der Zähltakt T2 ist bitblockbezogen und der Zähltakt T4 ist bitdoppelblockbezogen getaktet. Das Paketbitsetzsignal ist ein kurzer Impuls, der den Beginn der Paketbit(re)permutation charakterisiert und die eindeutige Übernahme der Maskensteuerinformationen (PAPBIT0-2, PAPIBITO-2) steuert. Das Lesesignal zeigt im zugeordneten nicht dargestellten Befehlsflag der Interfaceeinheit 1 den Startpunkt des Einlaufens des Bitstromes in der Interfaceeinheit 2 an.

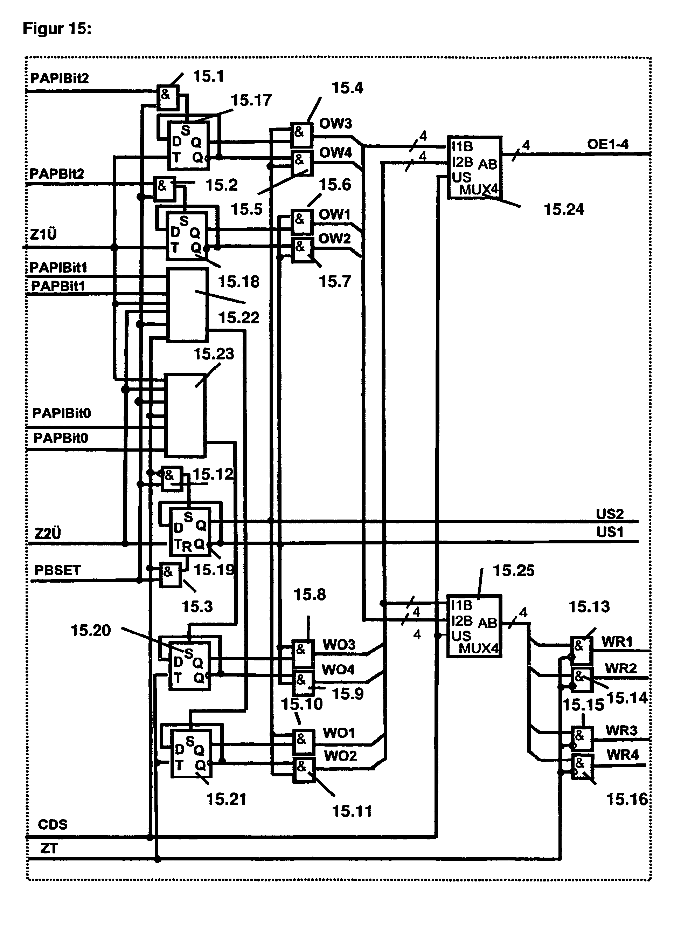

In Figur 15 ist die Bitpaketsteuereinheit 15 blockbildmäßig abgebildet. Bestandteile sind AND- Gatter (15.1 bis 15.11), AND- Gatter (15.12 bis 15.16) mit negiertem Eingang, D-Flipflops (15.17 bis 15.21), doppelblockbezogene Schreib-Lese- Steuereinheiten (15.22, 15.23) und Multiplexereinheiten (15.24, 15.25). Die Multiplexereinheiten (15.24, 15.25) bestehen aus 4 parallelen Multiplexer 10.j. Sie werden durch das Chiffrierung- Dechiffrierung- Signal CDS umgeschaltet. Bei aktiver Chiffrierung sind die Eingänge 11 B auf die Ausgänge AB durchgeschaltet. Bei aktiver Dechiffrierung liegen die Eingänge I2B an den Ausgängen AB an. Die D-Flipflops (15.20, 15.21) werden durch den zentralen Bittakt getaktet und dienen der bitbezogenen alternierenden Steuerung des Ein- und Auslesens der Paket-Bit(re)permutations-datenspeicherpaare (16.3, 16.4) und (16.5, 16.6). Die D-Flipflops (15.17, 15.18) werden mit Z1Ü bitblockbezogen getaktet und dienen dem bitblockbezogenen Aus- und Einlesen des Bitdatenstromes. Bei aktiver Chiffrierung wird der verschlüsselte permutierte Bitdatenstrom bitalternierenden in eines der Paket-Bit(re)-permutationsdatenspeicherpaare (16.3, 16.4) oder (16.5, 16.6) eingelesen, wobei aus dem anderen Paket-Bit(re)permutationsdatenspeicherpaar bitblockbezogen permutiert ausgelesen wird. Der Beginn des bitalternierenden Einlesens wird bitblockbezogen durch die doppelblockbezogenen Schreib-Lese-Steuereinheiten (15.22, 15.23) gesteuert. Bei aktiver Dechiffrierung wird der permutierte verschlüsselte permutierte Bitdatenstrom bitblockbezogen, durch PAPI und PAP adressiert, in den entsprechenden Paket-Bit(re)permutationsdatenspeicher eines mit (WO1, WO2) oder (WO3, WO4) ausgewählten Paket-Bit(re)permutationsdatenspeicherpaares eingelesen. Parallel dazu erfolgt das bitalternierende doppelblockbezogene Schreib-Lese- gesteuerte Auslesen aus dem anderen Paket-Bit(re)permutationsdatenspeicherpaar. Das D- Flopflop 15.19 dient der Umschaltsteuerung der Multiplexerpaare (11.3, 11.4) und (11.5, 11.6). In Abhängigkeit des Aktivzustandes von CDS wird es mit dem aktiven Paketbitsetzsignal PBSET gesetzt oder rückgesetzt. Wie aus Figur 15 hervorgeht, wird das Flipflop 15.19 bei Chiffrierung gesetzt und bei Dechiffrierung rückgesetzt.

Die doppelblockbezogenen Schreib-Lese- Steuereinheiten (15.22, 15.23) dienen bei der Chiffrierung dem eindeutigen durch (PAPIBIT0, PAPBITO), (PAPIBIT1, PAPBIT1) bitweise zufallsbestimmt gesteuerten Einlesen des Bitdatenstromes in die Paket-Bit(re)permutationsdatenspeicherpaare (16.3, 16.4) und (16.5, 16.6). Die Übernahme der Zufallssteuerinformationsbits (PAPIBIT0, PAPBIT0), (PAPIBIT1, PAPBIT1) erfolgt in Abständen vierer Bitblöcken, wobei die Zufallssteuerinformationsbitpaare (PAPIBIT0, PAPBITO) und (PAPIBIT1, PAPBIT1) um zwei Bitblöcken versetzt übernommen werden. Diese Steuerinformationsbits werden in den Einheiten (15.22, 15.23) zwischengespeichert und beim Einlesen herangezogen. Bei der Dechiffrierung dienen die Zufallssteuerinformationsbitpaare zum eindeutigen bitweise gesteuerten Auslesen der Paket-Bit(re)permutationsdatenspeicherpaare (16.3, 16.4) und (16.5, 16.6).

Am Ort der Verschlüsselung generiert der nicht dargestellte Mikrocontroller MC1 Zufallszahlen und/ oder entnimmt Zufallszahlen aus zufallsbestimmten Daten, die an einem anderen Ort generiert und vom Mikrocontroller MC2 bereitgestellt wurden. Mit den von mehreren Quellen bestimmten Zufallszahlen werden zufallsbestimmte Teilschlüssel, mindestens eine Maskenverteilungssteuerinformation und Permutationssteuerinformationen errechnet, wobei die Permutationssteuerinformationen den Bitort im permutierten Bitdatenblock kennzeichnen. Der Mikrocontroller MC1 sendet die Maskenverteilungssteuerinformation über die Interfaceeinheit 1 zum Programmiermaskensteuerregister 14.15. Mit dem Aktivwerden des Programmiermaskenregistersteuersignals PMR wird die Maskenverteilungssteuerinformation in das Register 14.15 übernommen. Nach der Übernahme erfolgt das Setzen des Zählers 14.17. Der Mikrocontroller MC1 schreibt über die Interfaceeinheit 1 die Permutationssteuerinformationen in den Permutationssteuerinformation-Look up Tabellenspeicher 6.5 und zufallsverteilt in die Masken- Look up Tabellenspeicher (6.0, 6.1, 6.2, 6.3, 6.4). Vorteilhaft wird parallel dazu der erste Teilschlüssel in einen der Teilschlüssel- Look up Tabellenspeicher 7.1 oder 7.2 eingelesen. Danach wird der zweite Teilschlüssel in den anderen Teilschlüssel- Look up Tabellenspeicher geschrieben. Die echtzeitfähige quantencomputersichere Verschlüsselung ist somit einsatzbereit. Der nicht dargestellte Mikrocontroller MC1 aktiviert mit CDS die Chiffrierung, der nicht dargestellte Mikrokontroller MC2 sendet Klardaten an den FIFO_1 (2.1). Die Klardaten werden im Parallel-Seriell-Schieberegister 2.2 in einen seriellen Bitstrom überführt, der bitweise bittaktperiodenbezogen und bitblockbezogen in einen der Bit(re)permutationsdatenspeicher (16.1, 16.2) durch Z1DO adressgesteuert eingeschrieben wird. Nach dem Einschreiben erfolgt die blockbezogene Bitpermutation durch PI- adressiertes Auslesen vom beschriebenen Bit(re)permutationsdatenspeicher. Parallel dazu wird der andere Bit(re)permutationsdatenspeicher analog eingelesen. Der ausgelesene permutierte Bitdatenstrom des ersten Bitdatenblocks wird bitweise zufallsbestimmt mit einem maskengesteuerten zufallsbestimmten Blockschlüssel verschlüsselt. Der dazu verwendete Blockschlüssel wird durch zufallsbestimmte Antivalenz- oder Äquivalenzverknüpfungen der zufallsbestimmten Teilschlüsselbits generiert. Alle Bits folgender bitpermutierter Bitblöcke werden blockbezogen bitweise zufallsbestimmt mit Blockschlüsselbits von antivalent- oder äquivalentverknüpften Teilschlüsselbits oder mit rückgekoppelten verschlüsselten permutierten Datenbits durch Antivalenz- oder Äquivalenzverknüpfungen verschlüsselt. Der so verschlüsselte permutierte Bitdatenstrom wird doppelblockbezogen zufallsbestimmt bitweise wechselnd und mit Z2DO adressgesteuert in die Paket- Bit(re)permutationsdatenspeicher eines Paket-Bit(re)permutationsdatenspeicherpaares geschrieben. Durch das PAP und PAPI adressgesteuerte Auslesen erfolgt eine Bitpermutation zwischen den Bits beider Bitblöcke des Doppelbitblockes.

Der nicht dargestellte Mikrocontroller MC1 berechnet mit der Maskenverteilungssteuerinformation und mit den Permutationssteuerinformationen relative Daten, wobei die Berechnungen hierarchisch in dynamisch sich ändernden Räumen verschiedener zufallsbestimmter Dimensionen in Bezug auf zufallsbestimmten Bezugspunkten und Translations- Rotationsvektoren erfolgen. Mehrfache zufallsbestimmte Datenbytepermutationen in unterschiedlichen Hierarchieebenen heben die Zuordnung eines permutierten relativen Datenbytes zum relativen Datum auf. Die permutierten relativen Daten werden in Form eines zusätzlichen Headers vor den verschlüsselten Daten angeordnet und in Verbindung mit den quantencomputersicheren Chiffredaten für den Ort der Entschlüsselung zur Verfügung gestellt.

Die erfindungsgemäße Lösung der echtzeitfähigen quantencomputersicheren Verschlüsselung stellt durch die bis zu 10³⁸ x128Bit langen dynamischen zufallsbestimmten Blockbitschlüsseln ein echte One-Time-Pad- Verschlüsselung dar. Durch bitblockbezogene Bit(re)permutationen, durch Begrenzung der maximal dynamischen Blockschlüsselrückkopplungen und durch doppelblockbezogene Paket- Bitpermutationen ist die quantencomputersichere Verschlüsselung ohne Anpassungen auch bei UDP- Protokollen einsetzbar.

Der hierarchische Aufbau der erfindungsgemäßen Lösung erhöht den Aufwand eines Kryptoangriffes datendoppelblockbezogen auf über 10⁸⁵⁰ Kombinationen. Die echtzeitfähige quantencomputersicheren Verschlüsselung von Daten aller Art widersteht durch die bis zu 10³⁷x128Bit- datenblockbezogenen dynamischen zufallsinformationengesteuerten Bitpermutationen, durch die echte One-Time-Pad-Verschlüsselung mit bis zu ca. 10³⁸ x 128Bit- langen dynamischen zufallsbestimmten Blockschlüsseln und durch die bis zu ca. 10³⁷ x128Bit- datendoppelblockbezogenen dynamischen zufallsinformationengesteuerten Paket- Bitpermutationen Quantencomputerangriffe und klassische Kryptoangriffe. Ein Effizienzverlust in Bezug auf Speicherplatz und Laufzeit tritt dabei nicht auf.

## Patentansprüche

1. Echtzeitfähige quantencomputersichere Verschlüsselung von Daten, wobei
- am Ort der Verschlüsselung zufallsbestimmte Permutationssteuerinformationen, die die Orte von Bits oder Bytes oder Bit- oder Bytepaketen der zu permutierenden und repermutierenden Daten innerhalb eines Datenblockes charakterisieren, in mindestens einen Permutationssteuerinformations- Look up Tabellenspeicher und zufallsverteilt in Abhängigkeit mindestens einer Maskenverteilungssteuerinformation, die selbst zufallsverteilt ist, in mindestens einen Masken- Look up Tabellenspeicher gespeichert werden,
- für die Generierungen von zufallsbestimmten Blockschlüsseln mindestens zwei zufallsbestimmte Teilschlüssel je in einen Teilschlüssel- Look up Tabellenspeicher hinterlegt werden,
- für blockweise auszuführenden Eingangspermutationen von Klardaten, für Generierungen von zufallsbestimmten Blockschlüsseln, für blockweise auszuführenden Ausgangspermutationen von verschlüsselten permutierten Daten die Permutationssteuerinformationen aus dem Permutationssteuerinformations- Look up Tabellenspeicher nacheinander wiederholend ausgelesen und über Logikverknüpfungen mit von Masken- Look up Tabellenspeichern gelieferten blockkonstanten Masken verknüpft werden,
- Ergebnisse der Logikverknüpfungen die auszuführenden Eingangspermutationen, die Generierungen von zufallsbestimmten Blockschlüsseln, die Klardatenverschlüsselung und die auszuführenden Ausgangspermutationen steuern,
- die Klardaten, blockweise gesteuert, mit Ergebnissen der Logikverknüpfungen eingangspermutiert, mit zufallsbestimmten Blockschlüsseln o-der mit Chiffredaten verschlüsselt und gesteuert mit Ergebnissen der Logikverknüpfungen ausgangspermutiert werden,
- mindestens die am Ort der Verschlüsselung zufallsbestimmten Permutationssteuerinformationen und Maskenverteilungssteuerinformation oder Maskenverteilungssteuerinformationen in einer geheimen Art und Weise , in Form permutierter relativer Daten oder verschlüsselter Daten, für den Ort der Entschlüsselung bereitgestellt werden,
- am Ort der Entschlüsselung die am Ort der Verschlüsselung zufallsbestimmten Permutationssteuerinformationen, in mindestens einen Permutationssteuerinformations- Look up Tabellenspeicher und zufallsverteilt in Abhängigkeit der Maskenverteilungssteuerinformation oder Maskenverteilungssteuerinformationen in ihre Masken- Look up Tabellenspeicher gespeichert werden,
- die für die Generierungen der zufallsbestimmten Blockschlüssel zufallsbestimmten Teilschlüssel in ihre Teilschlüssel- Look up Tabellenspeicher hinterlegt werden,
- für die blockweise auszuführenden Eingangsrepermutationen der Chiffredaten, für die Generierungen der für die Dechiffrierung erforderlichen Blockschlüssel, für die blockweise auszuführenden Ausgangsrepermutationen von entschlüsselten permutierten Daten die Permutationssteuerinformationen aus dem Permutationssteuerinformations- Look up Tabellenspeicher nacheinander wiederholend ausgelesen und über Logikverknüpfungen mit den von den Masken- Look up Tabellenspeichern gelieferten blockkonstanten Masken verknüpft werden,
- am Ort der Entschlüsselung die am Ort der Verschlüsselung entsprechend benutzten Ergebnisse der Logikverknüpfungen die auszuführenden Eingangsrepermutationen, die Generierung der für die Dechiffrierung erforderlichen Blockschlüssel, die Chiffredatenentschlüsselung und die auszuführenden Ausgangsrepermutationen steuern,
- die Chiffredaten, blockweise gesteuert, mit den am Ort der Verschlüsselung für die Ausgangspermutationen benutzten Ergebnisse der Logikverknüpfungen, eingangsrepermutiert, mit den entsprechenden Blockschlüsseln oder mit den entsprechenden Chiffredaten entschlüsselt und gesteuert mit den am Ort der Verschlüsselung für die Eingangspermutationen benutzten Ergebnisse der Logikverknüpfungen ausgangsrepermutiert werden, so dass die Klardaten zur Verfügung stehen.

2. Verschlüsselung nach Anspruch 1 **dadurch gekennzeichnet,**
- **dass** bei den Eingangspermutationen die Klardaten in einen Blockspeicher aufeinander folgend eingelesen und mit Ergebnissen der Logikverknüpfungen ausgelesen und bei den Ausgangsrepermutationen die entschlüsselten permutierten Daten in einen Blockspeicher mit den Ergebnissen der Logikverknüpfungen eingelesen und aufeinander folgend ausgelesen werden oder
- **dass** bei den Eingangspermutationen die Klardaten in einen Blockspeicher mit Ergebnissen der Logikverknüpfungen eingelesen und aufeinander folgend ausgelesen und bei den Ausgangsrepermutationen die entschlüsselten permutierten Daten in einen Blockspeicher aufeinander folgend eingelesen und mit den Ergebnissen der Logikverknüpfungen ausgelesen werden.

3. Verschlüsselung nach Anspruch 2 **dadurch gekennzeichnet, dass** Klar- oder permutierte Daten bitweise in Blockspeicher ein- und ausgelesen werden.

4. Verschlüsselung nach Anspruch 1 **dadurch gekennzeichnet,**
- **dass** die Teilschlüsselbits in ihre Teilschlüssel-Look up- Tabellenspeicher eingelesen werden,
- **dass** die Teilschlüsselbits mit Ergebnisse der Logikverknüpfungen aus ihren Teilschlüssel-Look up- Tabellenspeicher ausgelesen und mit Ergebnissen der Logikverknüpfungen gesteuert zu Blockschlüsselbits logikverknüpft werden,
- **dass** die Daten des ersten permutierten Klardatenblocks oder des ersten Blocks von verschlüsselten permutierten Daten mit dem ersten Blockschlüssel logikverknüpft werden und
- **dass** die Daten aller anderen permutierten Klardatenblöcke oder Blöcke von verschlüsselten permutierten Daten mit folgenden Blockschlüsseln oder mit verschlüsselten permutierten Daten als Blockschlüssel logikverknüpft werden.

5. Verschlüsselung nach Anspruch 4 **dadurch gekennzeichnet, dass** die Logikverknüpfungen zwischen Blockschlüssel und permutierten Klardaten oder Blockschlüssel und verschlüsselter permutierter Daten bitweise gesteuerte Antivalenz- und Äquivalenzverknüpfungen oder Antivalenz- oder Äquivalenzverknüpfungen sind.

6. Verschlüsselung nach Anspruch 5 **dadurch gekennzeichnet, dass** die Logikverknüpfungsauswahl bitweise maskenauswahlgesteuert oder bittaktgesteuert oder mit Hilfe eines Zählers oder mehrerer Zähler erfolgt, wobei ein oder mehrere Zähler voreinstellbare Zähler sind, dessen Voreinstellwert oder deren Voreinstellwerte aus den Ergebnissen der Logikverknüpfungen von Masken- und Permutationssteuerbits entnommen werden.

7. Verschlüsselung nach Anspruch 6 **dadurch gekennzeichnet, dass** die Verschlüsselung oder Entschlüsselung so gesteuert wird, dass permutierte Klardaten oder verschlüsselte permutierte Daten mit den Blockschlüsseln blockweise zufällig bitweise antivalent oder äquivalent oder zufällig bitweise ändernd antivalent oder äquivalent logikverknüpft werden.

8. Verschlüsselung nach Anspruch 7 **dadurch gekennzeichnet, dass** die Verschlüsselung oder Entschlüsselung so gesteuert wird, dass permutierte Klardaten oder verschlüsselte permutierte Daten blockweise mit einem Teil aus den Teilschlüssel gebildeten Blockschlüssel und einem Teil aus den verschlüsselten permutierten Daten als Blockschlüssel logikverknüpft werden.

9. Verschlüsselung nach Anspruch 1 **dadurch gekennzeichnet,**
- **dass** der Permutationssteuerinformations- Look up Tabellenspeicher wiederholend bittaktbezogen innerhalb eines Datenblockes vollständig ausgelesen wird,
- **dass** die Logikverknüpfungen von Permutationssteuer- und Maskeninformationen bitweise maskenauswahlgesteuerte Antivalenz- und Äquivalenzverknüpfungen oder Antivalenz- oder Äquivalenzverknüpfungen von Maskenund Permutationssteuerbits sind,
- **dass** die Maskenauswahl mit Hilfe eines Zählers oder mehrerer Zähler erfolgt, wobei ein oder mehrere Zähler voreinstellbare Zähler sind, dessen Voreinstellwert oder deren Voreinstellwerte aus den Ergebnissen der Logikverknüpfungen entnommen werden.

10. Verschlüsselung nach Anspruch 1 **dadurch gekennzeichnet,**
- **dass** bei den Ausgangspermutationen die verschlüsselten permutierten Daten in einen Datenblockspeicher aufeinander folgend eingelesen und mit Ergebnissen der Logikverknüpfungen ausgelesen und bei den Eingangsrepermutationen die permutierten verschlüsselten permutierten Daten in einen Blockspeicher mit den Ergebnissen der Logikverknüpfungen eingelesen und aufeinander folgend ausgelesen werden oder
- **dass** bei den Ausgangspermutationen die verschlüsselten permutierten Daten in einen Blockspeicher mit Ergebnissen der Logikverknüpfungen eingelesen und aufeinander folgend ausgelesen und bei den Eingangsrepermutationen die permutierten verschlüsselten permutierten Daten in einen Blockspeicher aufeinander folgend eingelesen und mit den Ergebnissen der Logikverknüpfungen ausgelesen werden oder
- **dass** bei den Ausgangspermutationen die verschlüsselten permutierten Datenbits Bit- wechselnd in zwei Bitdatenblockspeicher eines Doppelbitdatenblockspeichers geschrieben und parallel dazu aus einem weiteren Doppelbitdatenblockspeicher mit Ergebnissen der Logikverknüpfungen ausgelesen werden, wobei die Auswahl des Beginns des Abspeicherns der verschlüsselten permutierten Datenbits durch mindestens ein Ergebnisbit der Logikverknüpfungen und das Auslesen durch mindestens ein Ergebnisbit der Logikverknüpfungen gesteuert wird, und
- **dass** bei den Eingangsrepermutationen die permutierten verschlüsselten permutierten Daten, mit den entsprechenden Ergebnissen der Logikverknüpfungen gesteuert, in ihre Bitdatenblockspeicher eingelesen und Bitwechselnd aus den Bitdatenblockspeichern ausgelesen werden.

11. Verschlüsselung nach Anspruch 1 **dadurch gekennzeichnet, dass** für die
Eingangspermutationen, den Schlüsselgenerierungen und den Ausgangspermutationen verschiedene Ergebnisse der Logikverknüpfungen verwendet werden.

12. Verschlüsselung nach Anspruch 1 **dadurch gekennzeichnet, dass** am Ort
der Verschlüsselung mindestens eine von den folgend benannten Informationen wie Maskenverteilungssteuerungsinformation, Permutationssteuerinformationen, Teilschlüssel aus vom mehr als einer Zufallsquelle bereitgestellten Zufallszahlen generiert wird, wobei mindestens eine der Zufallsquellen sich nicht am Ort der Verschlüsselung befindet.

## Claims

1. Realtime-compatible quantum computer assured encryption of data, wherein
- at the location of the encryption, randomly determined permutation control information, characterizing locations of bits or bytes or bit or byte packets from the data intended to be permutated and repermutated within a data block, is stored in at least one permutation control information lookup table memory and, in a manner randomly distributed on the basis of at least one mask distribution control information item, which is itself randomly distributed, in at least one mask lookup table memory,
- for the generation operations for randomly determined block keys, at least two randomly determined component keys are each stored in a component key lookup table memory,
- for block-by-block executable input permutations of plain data, for generation operations for randomly determined block keys, for block-by-block executable output permutations of encrypted permutated data, the permutation control information from the permutation control information lookup table memory is successively repeatedly read and combined with block-constant masks provided by mask lookup table memories by means of logic functions,
- results from the logic functions control the executable input permutations, the generation operations for randomly determined block keys, the plain data encryption and the executable output permutations,
- the plain data, under block-by-block control, are input permutated with results from the logic functions, are encrypted with randomly determined block keys or with cipher data and are output permutated under control with results from the logic functions,
- at least the permutation control information and mask distribution control information or mask distribution control information randomly determined at the location of the encryption is/are provided in a secret manner, in the form of permutated relative data or encrypted data for the location of the decryption,
- at the location of the decryption, the permutation control information randomly determined at the location of the encryption is stored in at least one permutation control information lookup table memory and, in a manner randomly distributed on the basis of the mask distribution control information or mask distribution control information, in its mask lookup table memories,
- the component keys randomly determined for the generation operations for the randomly determined block keys are stored in their component key lookup table memories,
- for the block-by-block executable input repermutations of the cipher data, for the generation operations for the block keys required for the deciphering, for the block-by-block executable output repermutations of decrypted permutated data, the permutation control information from the permutation control information lookup table memory is successively repeatedly read and combined with the block-constant masks provided by the mask lookup table memories by means of logic functions,
- at the location of the decryption, the results - used accordingly at the location of the encryption - from the logic functions control the executable input repermutations, the generation of the block keys required for the deciphering, the cipher data decryption and the executable output repermutations,
- the cipher data, under block-by-block control, are input repermutated with the results - used at the location of the encryption for the output permutations - from the logic functions, are decrypted with the relevant block keys or with the relevant cipher data and are output repermutated under control with the results - used at the location of the encryption for the input permutations - from the logic functions, so that the plain data are available.

2. Eincryption according to claim 1, **characterized**
- **in that** for the input permutations the plain data are successively read into a block memory and are read out with results from the logic functions, and for the output repermutations, the decrypted permutated data are read into a block memory with the results from the logic functions and are successively read out or
- **in that** for the input permutations the plain data are read into a block memory with results from the logic functions and are successively read out, and for the output repermutations the decrypted permutated data are successively read into a block memory and are read out with the results from the logic functions.

3. Encryption according to Claim 2, **characterized in that** plain data or permutated data are read into and out from block memories on a bit-by-bit basis.

4. Encryption according to Claim 1, **characterized**
- **in that** the component key bits are read into their component key lookup table memories,
- **in that** the component key bits are read out from their component key lookup table memories with results from the logic functions and are logically combined with results from the logic functions under control to produce block key bits,
- **in that** the data from the first permutated plain data block or from the first block of encrypted permutated data are logically combined with the first block key, and
- **in that** the data from all other permutated plain data blocks or blocks of encrypted permutated data are logically combined with subsequent block keys or with encrypted permutated data as block keys.

5. Encryption according to Claim 4, **characterized in that** the logic functions between block key and permutated plain data or block key and encrypted permutated data are bit-by-bit controlled antivalence and equivalence or antivalance or equivalence functions.

6. Encryption according to Claim 5, **characterized in that** the logic function selection is made on a bit-by-bit mask-selection-controlled basis or bit-clock-controlled basis or using a counter or a plurality of counters, wherein one or more counters are presettable counters, the preset value or preset values of which are taken from the results from the logic functions on mask and permutation control bits.

7. Encryption according to Claim 6, **characterized in that** the encryption or decryption is controlled such that permutated plain data or encrypted permutated data are logically combined with the block keys on a block-by-block randomly bit-by-bit antivalent or equivalent basis or randomly on a bit-by-bit varying antivalent or equivalent basis.

8. Encryption according to Claim 7, **characterized in that** the encryption or decryption is controlled such that permutated plain data or encrypted permutated data are logically combined on a block-by-block basis with a portion block key formed from the component keys and a portion from the encrypted permutated data as a block key.

9. Encryption according to Claim 1, **characterized**
- **in that** the permutation control information lookup table memory is repeatedly read out completely on a bit clock basis within a data block,
- **in that** the logic functions of permutation control and mask information are bit-by-bit mask-selection-controlled antivalence and equivalence functions or antivalence or equivalence functions of mask and permutation control bits,
- **in that** the mask selection is made using a counter or a plurality of counters, wherein one or more counters are presettable counters, the preset value or preset values of which are taken from the results from the logic functions.

10. Encryption according to Claim 1, **characterized**
- **in that** for the output permutations, the encrypted permutated data are successively read into a data block memory and are read out with results from the logic functions, and for the input repermutations, the permutated encrypted permutated data are read into a block memory with the results from the logic functions and are successively read out or
- **in that** for the output permutations, the encrypted permutated data are read into a block memory with results from the logic functions and are successively read out, and for the input repermutations, the permutated encrypted permutated data are successively read into a block memory and are read out with the results from the logic functions or
- **in that** for the output permutations, the encrypted permutated data bits are written on an alternating bit basis to two bit data block memories in a dual bit data block memory and, in parallel therewith, are read out from a further dual bit data block memory with results from the logic functions, wherein the selection of the start of the storage of the encrypted permutated data bits is controlled by at least one result bit from the logic functions, and the reading is controlled by at least one result bit from the logic functions, and
- **in that** for the input repermutations, the permutated encrypted permutated data are, under the control of the relevant results from the logic functions, read into their bit data block memories and are read out from the bit data block memories on an alternating bit basis.

11. Encryption according to Claim 1, **characterized in that** different results from the logic functions are used for the input permutations, the key generation operations and the output permutations.

12. Encryption according to Claim 1, **characterized in that** at the location of the encryption, at least one of the information items cited below, such as mask distribution control information, permutation control information, component keys, is generated from random numbers provided by more than one random source, wherein at least one of the random sources is not at the location of the encryption.

## Revendications

1. Chiffrement de données pouvant fonctionner en temps réel, sécurisé vis-à-vis de l'informatique quantique, dans lequel
- sur le lieu du chiffrement, des informations de commande de permutation déterminées aléatoirement, lesquelles caractérisent les lieux de bits ou d'octets ou de paquets de bits ou d'octets des données à permuter et à re-permuter à l'intérieur d'un bloc de données, sont enregistrées dans au moins une table mémoire de consultation d'informations de commande de permutation et de manière répartie aléatoirement en fonction d'au moins une information de commande de répartition de masques, laquelle est elle-même répartie aléatoirement, dans au moins une table mémoire de consultation de masques,
- pour la génération de clés de bloc déterminées aléatoirement, au moins deux éléments de clé déterminés aléatoirement étant respectivement déposés dans une table mémoire de consultation d'éléments de clé,
- pour des permutations d'entrée de données en clair à effectuer par blocs, pour des générations de clés de bloc déterminées aléatoirement, pour des permutations de sortie à effectuer par blocs de données permutées chiffrées, les informations de commande de permutation étant extraites successivement de manière répétée de la table mémoire de consultation d'informations de commande de permutation et étant liées via des opérations logiques avec des masques à constance de bloc délivrés par des tables mémoire de consultation de masques,
- des résultats des opérations logiques commandant les permutations d'entrée à effectuer, les générations de clés de bloc déterminées aléatoirement, le chiffrement de données en clair et les permutations de sortie à effectuer,
- les données en clair, commandées par blocs, soumises à une permutation d'entrée avec des résultats des opérations logiques, chiffrées avec des clés de bloc déterminées aléatoirement ou avec des données chiffrées et commandées avec des résultats des opérations logiques, étant soumises à une permutation de sortie,
- au moins les informations de commande de permutation déterminées aléatoirement sur le lieu du chiffrement et l'information de commande de répartition de masques ou des informations de commande de répartition de masques étant mises à disposition d'une manière secrète sous forme de données relatives permutées ou de données chiffrées pour le lieu du déchiffrement,
- sur le lieu du déchiffrement, les informations de commande de permutation déterminées aléatoirement sur le lieu du chiffrement, dans au moins une table mémoire de consultation d'informations de commande de permutation et de manière répartie aléatoirement en fonction de l'information de commande de répartition de masques ou d'informations de commande de répartition de masques étant enregistrées dans leurs tables mémoire de consultation de masques,
- les éléments de clé déterminés aléatoirement pour les générations des clés de bloc déterminées aléatoirement étant déposés dans leurs tables mémoire de consultation d'éléments de clé,
- pour les re-permutations d'entrée à effectuer par blocs des données chiffrées, pour les générations des clés de bloc nécessaires pour le déchiffrement, pour les re-permutations de sortie à effectuer par blocs de données permutées déchiffrées, les informations de commande de permutation étant extraites successivement de manière répétée de la table mémoire de consultation d'informations de commande de permutation et étant liées via des opérations logiques avec les masques à constance de bloc délivrés par les tables mémoire de consultation de masques,
- sur le lieu du déchiffrement, les résultats des opérations logiques utilisés de manière correspondante sur le lieu du chiffrement commandant les re-permutations d'entrée à effectuer, la génération des clés de bloc nécessaires pour le déchiffrement, le déchiffrement des données chiffrées et les re-permutations de sortie à effectuer,
- les données chiffrées, commandées par blocs, avec les résultats des opérations logiques utilisés sur le lieu du chiffrement pour les permutations de sortie, soumises à une re-permutation d'entrée, déchiffrées avec les clés de bloc correspondantes ou avec les données chiffrées correspondantes et commandées avec les résultats des opérations logiques utilisés sur le lieu du chiffrement pour les permutations d'entrée, étant soumises à une re-permutation de sortie, de sorte que les données en clair sont mises à disposition.

2. Chiffrement selon la revendication 1, **caractérisé en ce que**
- au niveau des permutations d'entrée, les données en clair sont introduites successivement dans un bloc mémoire et sont extraites avec des résultats des opérations logiques et **en ce qu'**au niveau des repermutations de sortie, les données permutées déchiffrées sont introduites dans un bloc mémoire avec les résultats des opérations logiques et sont extraites successivement ou bien
- **en ce qu'**au niveau des permutations d'entrée, les données en clair sont introduites dans un bloc mémoire avec des résultats des opérations logiques et sont extraites successivement et **en ce qu'**au niveau des repermutations de sortie, les données permutées déchiffrées sont introduites successivement dans un bloc mémoire et sont extraites avec les résultats des opérations logiques.

3. Chiffrement selon la revendication 2, **caractérisé en ce que** des données en clair ou permutées sont introduites par bits dans des blocs mémoire et extraites par bits de ceux-ci.

4. Chiffrement selon la revendication 1, **caractérisé en ce que**
- les bits d'éléments de clé sont introduits dans leurs tables mémoire de consultation d'éléments de clé,
- les bits d'éléments de clé étant extraits avec des résultats des opérations logiques de leurs tables mémoire de consultation d'éléments de clé, et de manière commandée avec des résultats des opérations logiques, étant soumis à une opération logique pour donner des bits de clés de bloc,
- les données du premier bloc de données en clair permuté ou du premier bloc de données permutées chiffrées étant soumises à une opération logique avec la première clé de bloc et
- les données de tous les autres blocs de données en clair permutés ou blocs de données permutées chiffrées étant soumises à une opération logique avec des clés de bloc suivantes ou avec des données permutées chiffrées pour donner une clé de bloc.

5. Chiffrement selon la revendication 4, **caractérisé en ce que** les opérations logiques entre clé de bloc et données en clair permutées ou clé de bloc et données permutées chiffrées sont des opérations logiques antivalentes et équivalentes commandées par bits ou des opérations logiques antivalentes ou équivalentes.

6. Chiffrement selon la revendication 5, **caractérisé en ce que** le choix des opérations logiques s'effectue par bits de manière commandée par choix de masques ou par pilotage cadencé par bits ou à l'aide d'un compteur ou de plusieurs compteurs, moyennant quoi un ou plusieurs compteurs sont des compteurs pré-réglables dont la valeur de préréglage ou dont les valeurs de préréglage sont issues des résultats des opérations logiques de bits de commande de masques et de permutation.

7. Chiffrement selon la revendication 6, **caractérisé en ce que** le chiffrement ou le déchiffrement sont commandés de manière à ce que des données en clair permutées ou des données permutées chiffrées soient soumises à une opération logique avec les clés de bloc, par blocs, de manière aléatoire, par bits, de manière antivalente ou équivalente ou de manière à modifier aléatoirement par bits de façon antivalente ou équivalente.

8. Chiffrement selon la revendication 7, **caractérisé en ce que** le chiffrement ou déchiffrement est commandé de manière à ce que des données en clair permutées ou des données permutées chiffrées soient soumises par blocs avec une partie de clé de bloc formée à partir des éléments de clé et une partie des données permutées chiffrées à une opération logique pour donner une clé de bloc.

9. Chiffrement selon la revendication 1, **caractérisé en ce que**
- la table mémoire de consultation d'informations de commande de permutation est entièrement extraite de manière répétée concernant une cadence par bits à l'intérieur d'un bloc de données,
- les opérations logiques d'informations de commande de permutation et de masques étant des opérations logiques antivalentes et équivalentes commandées par sélection de masques par bits ou des opérations logiques antivalentes ou équivalentes de bits de commande de permutation et de masques,
- la sélection de masques s'effectuant à l'aide d'un compteur ou de plusieurs compteurs, un ou plusieurs compteurs étant des compteurs pré-réglables dont la valeur de préréglage ou dont les valeurs de préréglage sont issues des résultats des opérations logiques.

10. Chiffrement selon la revendication 1, **caractérisé en ce que**
- au niveau des permutations de sortie, les données permutées chiffrées sont introduites successivement dans un bloc mémoire de données et sont extraites avec des résultats des opérations logiques et **en ce qu'**au niveau des re-permutations d'entrée, les données permutées chiffrées permutées sont introduites dans un bloc mémoire avec les résultats des opérations logiques et sont extraites successivement, ou bien
- **en ce qu'**au niveau des permutations de sortie, les données permutées chiffrées sont introduites dans un bloc mémoire avec des résultats des opérations logiques et sont extraites successivement et **en ce qu'**au niveau des re-permutations d'entrée, les données permutées chiffrées permutées sont introduites successivement dans un bloc mémoire et sont extraites avec les résultats des opérations logiques, ou bien
- **en ce qu'**au niveau des permutations de sortie, les bits de données permutés chiffrés sont inscrits par alternance de bits dans deux blocs mémoire de données binaires d'un bloc mémoire de données à deux bits et sont extraits parallèlement à cela d'un autre bloc mémoire de données à deux bits avec des résultats des opérations logiques, le choix du début de l'archivage des bits de données permutés chiffrés étant commandé par au moins un bit de résultat des opérations logiques et l'extraction par au moins un bit de résultat des opérations logiques, et
- **en ce qu'**au niveau des re-permutations d'entrée, les données permutées chiffrées permutées sont introduites de manière commandée avec les résultats correspondants des opérations logiques dans leurs blocs mémoire de données binaires et sont extraites par alternance de bits des blocs mémoire de données binaires.

11. Chiffrement selon la revendication 1, **caractérisé en ce que**, pour les permutations d'entrée, les générations de clés et les permutations de sortie, on utilise différents résultats des opérations logiques.

12. Chiffrement selon la revendication 1, **caractérisé en ce que**, sur le lieu du chiffrement, au moins l'une des dénommées informations suivantes telles que l'information de commande de répartition de masques, des informations de commande de permutation, des éléments de clé est générée à partir de nombres aléatoires mis à disposition par plus d'une source aléatoire, au moins l'une des sources aléatoires ne se trouvant pas sur le lieu du chiffrement.
